# EUROPÄISCHE PATENTSCHRIFT

(11) **EP 0 599 811 B1**
(45) Veröffentlichungstag und Bekanntmachung des Hinweises auf die Patenterteilung: **24.01.1996**
(21) Anmeldenummer: 94100587.8
(22) Anmeldetag: 03.10.1991
(51) Int. Cl.: B60J 7/22

(54) **Cabriolet mit einer windabweisenden Abdeckung**
Cabriolet with a wind-deflecting cover
Cabriolet avec couverture à déflexion d'air

(30) Priorität: 27.11.1990 DE 4037705
(43) Veröffentlichungstag der Anmeldung: 01.06.1994
(62) Teilanmeldung aus: 91116892.0
(73) Patentinhaber: MERCEDES-BENZ AG, D-70327 Stuttgart (DE)
(72) Erfinder: Götz, Hans, Dipl.-Ing., D-71034 Böblingen (DE); Baumann, Karl-Heinz, Dipl.-Ing., D-71149 Bondorf (DE)

(56) Entgegenhaltungen:
- DE-A- 3 836 375
- DE-A- 3 923 558
- DE-C- 3 537 644
- DE-C- 3 914 036
- DE-U- 9 004 971

## Beschreibung

Die Erfindung betrifft ein Cabriolet mit einer windabweisenden Abdeckung gemäß dem Oberbegriff des Patentanspruchs 1.

Aus der DE-A 39 23 558 ist bereits ein Cabriolet gemäß dem Oberbegriff des Anspruchs 1 mit einer windabweisenden Abdeckung bekannt, auf der hinter den Vordersitzen in Wirkstellung senkrecht ein als Scheibe, Platte oder umrahmtes Netz ausgebildeter Windschutz befestigt ist. Der Windschutz ist in eine waagrechte Nichtgebrauchsstellung gegen die Abdeckung in Abdeckstellung umklappbar. Die Überdeckung des Sitz- oder Stauraums hinter den Vordersitzen durch die Abdeckung wirkt mit einem derart heruntergeklappten Windschutz weit weniger ansprechend. Außerdem kann der Windschutz z.B durch einen auf ihm abgelegten Gegenstand beschädigt werden und wird erst durch ein Zusammenklappen der beiden Abdeckteile geschützt, wodurch aber die Abdeckteile ihre Abdeckfunktion nicht mehr voll wahrnehmen. Eine Abstützung der Wirkstellung des Windschutzes muß durch zusätzliche, stabil ausgebildete Abstützteile herbeigeführt werden.

In der DE-A 38 36 375 ist ein als Rollo ausgebildeter, senkrechter Windschutz beschrieben, der mit seiner Unterkante etwa auf Höhe der Bordkante eines Cabriolets endet und dort in ein etwa horizontales, gleichfalls netzbespannntes, eine Abdeckung bildendes Teil übergeht. Über die Ausbildung dieses Übergangs und die daraus resultierende Handhabung des Windschutzes und der Abdeckung ist hier nichts ausgesagt.

In der EP-A 02 58 823 sind zwei Rollos offenbart, deren Aufwickelrollen, jede für sich, in einem Aufnahmerohr gelagert sind, sowie beide Aufnahmerohre aneinander festgelegt sind. Die beiden Aufnahmerohre ragen nebeneinanderliegend sperrig vom Sitz ab und behindern damit bei einem Cabrio unter einer gewissen Verletzungsgefahr den Zugang zum Stauraum hinter den Vordersitzen.

Der Erfindung liegt die Aufgabe zugrunde, bei einer gattungsgemäßen Anordnung die Handhabung eines Windschutzes und einer damit verbundenen Abdeckung zu verbessern.

Die Aufgabe wird durch die kennzeichnenden Merkmale des Anspruchs 1 gelöst.

Der Windschutz ist ohne störende Vibrationen und beim Transport sehr handlich in einem durch zwei Platten einer Abdeckung gebildeten Behälter untergebracht. Die obenliegende Platte kann dabei auch der Arretierung des aufgestellten Windschutzes dienen. Die horizontal am Cabriolet-Aufbau aufliegende Abdeckung ist durch das Zuklappen eines Verdeckkastendeckels mit dafür vorgesehenen Mitteln arretierbar, wenn gewährleistet ist, daß dieser nur bei stillstehendem Fahrzeug betätigt wird.

Die Gegenstände weiterer Unteransprüche bilden vorteilhafte Ausgestaltungsmöglichkeiten der Gegenstände vorherstehender Ansprüche.

Ein Ausführungsbeispiel der Erfindung ist in der Zeichnung dargestellt.

Es zeigen:
- Fig. 1:: in geschnittener Seitenansicht eine Abdeckung mit einem angelenkten Windschutz, und
- Fig. 2:: in Draufsicht ein Schrägbild der Abdeckung aus Fig. 1 mit aufgenommenem Windschutz.

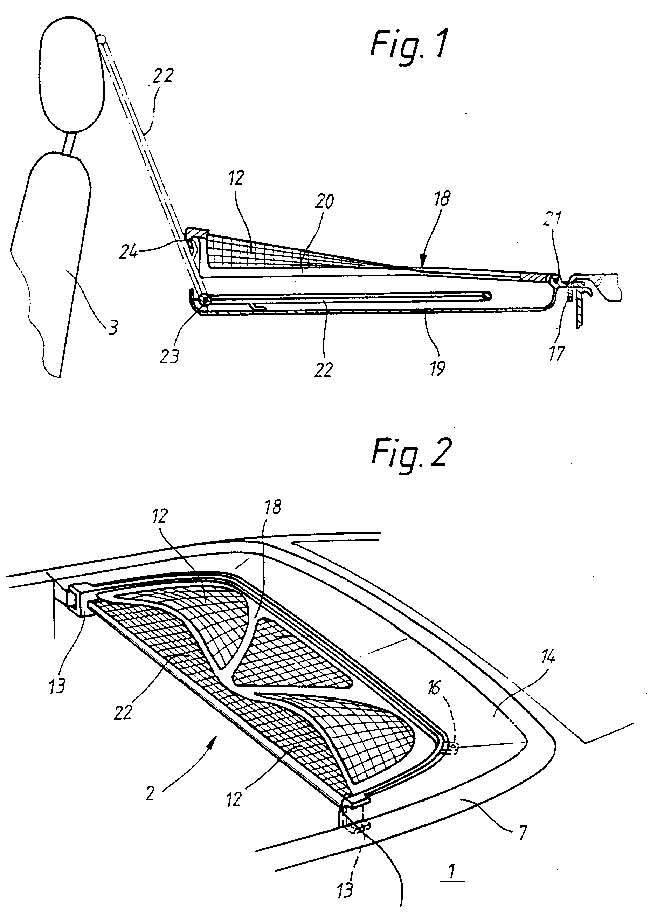

Fig. 1 zeigt eine Abdeckung 18, die zwei aufeinanderliegende Platten 19,20 umfaßt, welche an einem Scharnier 21 auseinanderschwenkbar sind. Nach dieser Aufschwenkbewegung findet dazwischen in Nichtgebrauchsstellung ein plattenförmiger Windschutz 22 Platz, der an der unteren Platte 19 ebenfalls über ein Scharnier 23 schwenkbar festgelegt ist. Danach kann die Abdeckung 18 mit dem Windschutz 22 als Einheit transportiert werden. Der Windschutz 22 ist in eine Wirkstellung (strichpunktiert gezeichnet) hochschwenkbar, in der er hinter der vorderen Sitzreihe 3 von der Bordkante 7 des Cabriolets 1 aus etwa senkrecht hochragt, und zusammen mit der Abdeckung 18 diese Sitzreihe 3 vor Luftverwirbelungen aus dem Fondbereich schützt. Dabei wird der Windschutz 22 durch einen Fortsatz 24 an der oberen Platte 20 arretiert. Wie in Fig. 2 zu sehen ist, weisen die Abdeckung 18, und ebenfalls der Windschutz 22, Abschnitte auf, die als durchbrochenes Netz 12 ausgebildet sind, so daß hindurchgesehen werden kann, und der Eindruck einer Schutzplatte optisch aufgelockert wird. Diese Abdeckung 18 zeigt vorne an ihrem Rahmen seitlich liegende Auflagen 13, und nahe einem Verdeckkastendeckel 14 als Arretierungen mit einer öffnung versehene Fortsätze 16, in die ein Rastbolzen 17, der am Verdeckkastendeckel 14 befestigt ist, bei geschlossenem Verdeckkastendeckel 14 eingreift. Dadurch wird die Abdeckung 18 durch die Schließung des Verdeckkastendeckels 14 automatisch arretiert.

## Patentansprüche

1. Cabriolet mit einer windabweisenden Abdeckung (18), die den Raum (2) hinter einer vorderen Sitzreihe (3) nach oben abdeckt, und an der an einer vorneliegenden Abschlußkante ein Windschutz (22) befestigt ist, der in Wirkstellung etwa senkrecht von der Höhe der Bordkante (7) aus hochragt, und der in eine Nichtgebrauchsstellung absenkbar ist,
**dadurch gekennzeichnet,**
daß die Abdeckung (18) zwei aufeinanderliegende, an einem Scharnier (21) aufschwenkbare Platten (19,20) aufweist, und daß der Windschutz (22) gegenüberliegend diesem Scharnier (21) schwenkbar an der untenliegenden Platte (19) festgelegt und zwischen diese Platten (19,20) einschwenkbar ist, und daß die obenliegende Platte (20) einen Fortsatz (24) aufweist, der den Windschutz (22) in seiner hochgeschwenkten Wirkstellung arretiert.

2. Cabriolet nach Anspruch 1,
**dadurch gekennzeichnet,**
daß nahe eines Verdeckkastendeckels (14) eines Fahrzeugverdecks liegende Arretierungen (16) der Abdeckung (18) als Fortsätze ausgebildet sind, die durch Rastmittel (17) des Verdeckkastendeckels (14) in dessen Schließstellung arretierbar sind.

3. Cabriolet nach Anspruch 1,
**dadurch gekennzeichnet,**
daß der Windschutz (22) in Wirkstellung an einem Überrollbügel befestigbar ist.

4. Cabriolet nach einem der vorherstehenden Ansprüche,
**dadurch gekennzeichnet,**
daß der Windschutz (22) und/oder die Abdeckung (18) Abschnitte aufweisen, die als durchbrochenes Netz (12) ausgebildet sind.

## Claims

1. Cabriolet with a wind-deflecting cover (18) which covers the space (2) behind a front row of seats (3) at the top and on which is secured, at a forward boundary edge, a windscreen (22) which, in the operative position, projects approximately vertically from the level of the upper edge (7) and can be lowered into an out-of-use position, characterised in that the cover (18) has two panels (19, 20) which rest one upon the other and can be swivelled open at a hinge (21), and in that, opposite to this hinge (21) the windscreen (22) is swivellably fixed on the lower panel (19) and can be swivelled in between these panels (19, 20), and in that the upper panel (20) has an extension (24) which locks the windscreen (22) in its swivelled-up operative position.

2. Cabriolet according to Claim 1, characterised in that locking devices (16) of the cover (18), the said locking devices being situated near to a hood-compartment lid (14) of a vehicle hood, are designed as extensions which can be locked by locking means (17) of the hood-compartment lid (14) in the closed position of the latter.

3. Cabriolet according to Claim 1, characterised in that, in the operative position, the windscreen (22) can be fixed on a roll bar.

4. Cabriolet according to one of the preceding claims, characterised in that the windscreen (22) and/or the cover (18) have portions which are designed as an openwork net (12).

## Revendications

1. Cabriolet muni d'une protection formant déflecteur (18), qui ferme en haut le compartiment (2) situé derrière une rangée de sièges avant (3), et au bord terminal, situé en avant, de laquelle est fixé un pare-vent (22), qui s'élève à peu près verticalement au-dessus du niveau de la ceinture (7) de la carrosserie dans sa position active et qui peut être rabattu dans une position d'inutilisation,
caractérisé
en ce que la protection (18) comprend deux panneaux (19, 20) superposés, qu'on peut ouvrir par pivotement au droit d'une charnière (21), en ce que le pare-vent (22) est fixé au panneau inférieur (19) par une liaison pivotante à l'opposé de cette charnière (21) et peut être rabattu entre ces panneaux (19, 20) et en ce que le panneau supérieur (20) présente une patte (24) qui bloque le pare-vent (22) dans sa position active relevée.

2. Cabriolet selon la revendication 1,
caractérisé
en ce qu'à proximité du couvercle (14) du compartiment de la capote du véhicule, des arrêts horizontaux (16) de la protection (18) forment des pattes qui peuvent être bloquées par des moyens de verrouillage (17) du couvercle (14) du compartiment de la capote dans sa position de fermeture.

3. Cabriolet selon la revendication 1,
caractérisé
en ce que le pare-vent (22) peut être fixé à un arceau de sécurité dans sa position active.

4. Cabriolet selon une des revendications précédentes,
caractérisé
en ce que le pare-vent (22) et/ou la protection (18) présentent des zones qui sont réalisées sous la forme d'un filet ajouré (12).
